(19) Europäisches Patentamt
European Patent Office
Office européen des brevets

(11) **EP 3 080 555 B1**

(12) **EUROPÄISCHE PATENTSCHRIFT**

(45) Veröffentlichungstag und Bekanntmachung des Hinweises auf die Patenterteilung:
**17.01.2018 Patentblatt 2018/03**

(21) Anmeldenummer: **14821490.1**

(22) Anmeldetag: **19.11.2014**

(51) Int Cl.:
**G01D 5/244** *(2006.01)*    G01D 5/245 *(2006.01)*

(86) Internationale Anmeldenummer:
**PCT/DE2014/200645**

(87) Internationale Veröffentlichungsnummer:
**WO 2015/086014 (18.06.2015 Gazette 2015/24)**

(54) **VORRICHTUNG UND VERFAHREN ZUR MESSUNG EINES ROTORPARAMETERS**

DEVICE FOR AND METHOD OF MEASURING A ROTOR PARAMETER

DISPOSITIF ET PROCÉDÉ DE MESURE D'UN PARAMÈTRE DE ROTOR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.12.2013 DE 102013225831**

(43) Veröffentlichungstag der Anmeldung:
**19.10.2016 Patentblatt 2016/42**

(73) Patentinhaber: **Schaeffler Technologies AG & Co. KG**
**91074 Herzogenaurach (DE)**

(72) Erfinder:
• **WERNER, Olaf**
  **77815 Bühl (DE)**
• **HUBER, Michael**
  **77885 Achern (DE)**

(56) Entgegenhaltungen:
**EP-A2- 0 310 823      DE-A1-102007 033 731**
**DE-A1-102008 014 075    DE-A1-102012 209 275**
**US-A- 5 297 048**

EP 3 080 555 B1

**Beschreibung**

Die Erfindung betrifft eine Vorrichtung und ein Verfahren zur Messen eines Rotorparameters, insbesondere eines Rotors eines Elektromotors (E-Motor) eines Hybridmoduls, gemäß dem Oberbegriff des Anspruchs 1.

Für die Messung der Rotorlage von elektrischen Maschinen in hybridisierten Antriebssträngen werden Resolver nach dem Reluktanz- oder dem Wirbelstromprinzip eingesetzt. Diese Messsysteme ermitteln den relativen Winkel der Rotorpole zu den Statorpolen (Polwinkel). Durch den mechanischen Aufbau (hohe Anzahl an Messspulen und Pole) und das physikalische Messprinzip entstehen in der zeitlichen Winkelauflösung höhere Ordnungen, welche bei einer Differentiation nach der Zeit (Berechnen der aktuellen Drehgeschwindigkeit und daraus der aktuellen Drehzahl) zu großen Fehlern führen. Zudem sind derartige Resolver sehr teuer.

Aus jeder der EP 0 310 823 A2 und der US 5 297 048 A ist eine Vorrichtung gemäß dem Oberbegriff des Anspruchs 1 bekannt.

Bezüglich weiteren Standes der Technik wird auf die DE 10 2007 033 731 A1, die DE 10 2008 014 075 A1 und die DE 10 2012 209 275 A1 verwiesen.

Die Erfinder haben sich daher die Aufgabe gestellt, die Messung von Rotorparametern zu verbessern, insbesondere die Genauigkeit zu erhöhen und die Kosten einer entsprechenden Messvorrichtung zu senken.

Diese Aufgabe wird mit den in Anspruch 1 angegebenen Maßnahmen gelöst.

Weitere vorteilhafte Ausgestaltungen der vorliegenden Erfindung sind Gegenstand der abhängigen Ansprüche.

Hierdurch ist es erstmals möglich, einen Rotorparameter auch für eine solche Drehposition des Rotors eines E-Motors, bevorzugt eines E-Motors Hybridmoduls zu bestimmen, welche zwischen den Drehpositionen liegt, an denen ein Vorbeilaufen von Inkrementmarken detektiert wird. Damit wird die Genauigkeit der Messung signifikant erhöht. Bevorzugt wird mit einer derart genauen Messung, insbesondere der Rotordrehzahl, eine Gegenanregung (aktive Dämpfung in einem hybridisierten Antriebsstrang) mittels einer elektrischen Maschine durchgeführt, was in einer besonders effektiven Weise erst durch die genaue Messung möglich ist.

Die Erfindung beschreibt deshalb ein neuartiges Sensorkonzept zum genauen Messen der aktuellen Rotordrehzahl und bevorzugt des (initialen) relativen Winkels. Es wird ferner ein Verfahren zur noch genaueren Bestimmung des absoluten Rotorwinkels, basierend auf der Drehzahlmessung und einer Markierung, vorgestellt.

Ein Rotorparameter ist bevorzugt ein Wert, welcher einen physikalischen Zustand des Rotors wiedergibt, insbesondere einen Zustand bezüglich der Lage/Orientierung oder Bewegung des Rotors in Bezug auf den Stator. Ein Rotorparameter ist bevorzugt ein Drehwinkel $\alpha$ oder eine Drehwinkelgeschwindigkeit $\dot{\alpha}$ oder eine Drehzahl ($\dot{\alpha}/360°$) oder eine Drehwinkelbeschleunigung $\ddot{\alpha}$,

- z.B. der Rotorwinkel $\Phi$ [°] (Winkel zwischen der aktuellen Rotorlage bzw. Drehposition gegenüber einer Referenzrotorlage, wobei 360° einer vollen Umdrehung des Rotors entsprechen), die auf dem Rotorwinkel basierende momentane oder mittlere Rotorwinkelgeschwindigkeit $\dot{\Phi}$ [°/s], Rotordrehzahl N [s$^{-1}$], Rotorwinkelbeschleunigung $\ddot{\Phi}$ [°/s$^2$],
- oder z.B. ein Polwinkel $\varphi$ [°] einer elektrischen Maschine, z.B. E-Motor, (Winkel zwischen der aktuellen Rotorlage bzw. Drehposition gegenüber einer Referenzrotorlage, wobei 360° eine Umdrehung des Rotors geteilt durch die Poolpaarzahl P entsprechen, z.B. bei zwei Polpaaren entspricht eine Drehung um einen Polwinkel=360° einer halben Umdrehung des Rotors, d.h. einer Drehung um einen Rotorwinkel=180°), die auf dem Rotorwinkel basierende momentane oder mittlere Polwinkelgeschwindigkeit $\dot{\varphi}$ [°/s], Poldrehzahl n [s$^{-1}$] (Polwinkelgeschwindigkeit geteilt durch 360°), Polwinkelbeschleunigung $\ddot{\varphi}$ [°/s$^2$].

$$\Phi = \frac{\varphi}{P}.$$

Zwischen dem Rotorwinkel und dem Polwinkel und der Polpaarzahl P besteht die Beziehung:

Eine Inkrementalmaßverkörperung mit Inkrementmarken ist bevorzugt eine mittels eines Sensors messbare Kennzeichnung mit bevorzugt sich periodisch innerhalb der Kennzeichnung wiederholenden Inkrementmarken. Bevorzugt liegt zwischen (regulären) Inkrementmarken ein gleicher Abstand vor. Die Inkrementmarken weisen auf oder sind z.B. eine sich periodisch wiederholende Strichkennzeichnung (z.B. schwarz/weiß), Lochung, Verzahnung (z.B. Zahnkranz) oder Riffelung, Magnetisierung oder Beschichtung, die z.B. magnetisch, optisch oder kapazitiv diskriminierende periodische Bereiche schafft. Eine Inkrementmarke ist bevorzugt lediglich eine solche Markierung, welche durch den Sensor als Inkrementmarke erkennbar ist. Sie ist bevorzugt auf einer Radialfläche oder einer Axialfläche eines mit dem Rotor drehfest verbundenen Bauteils des Rotors selbst angeordnet. Bevorzugt weist die Inkrementalmaßverkörperung innerhalb einer Drehung um 360° eines Polwinkels (d.h. eine Drehung um ein Polpaar) eine Vielzahl von Inkrementmarken auf.

Ein Inkrementmaßsensor ist bevorzugt ein Sensor zur Erfassung des Vorbeilaufens einer Inkrementmarke am Anbringungsort des Inkrementmaßsensors. Er ist z.B. ein optischer Sensor (z.B. bei einer Strichkennzeichnung oder Lochung als Inkrementmarke) oder ein induktiver Sensor, bei dem durch ein Vorbeilaufen einer Inkrementmarke ein Strom induziert wird (z.B. bei Riffelung/Verzahnung, Magnetisierung) oder ein Abstandssensor (z.B. bei Riffelung/Verzahnung).

Das Erfassen eines Vorbeilaufens einer Inkrementmarke erfolgt bevorzugt mittels einer Schwellwertauswertung, z.B. des induzierten Stroms, bevorzugt mittels einer Transistor-Transistor-Logik-Schaltung (TTL-Schaltung), welche z.B. ein "High"-Signal ausgibt, sofern sich eine Inkrementmarke im Messbereich des Inkrementmaßsensors befindet, und ein "Low"-Signal ausgibt, sofern sich ein Bereich zwischen zweier Inkrementmarken im Messbereich des Inkrementmaßsensors befindet.

Die Auswerteeinheit ist bevorzugt eingerichtet, ein Sensorsignal des Inkrementmaßsensors zu empfangen und auszuwerten. Sie weist bevorzugt eine TTL-Schaltung auf, besonders bevorzugt alternativ oder zusätzlich einen Komparator, ganz besonders bevorzugt alternativ oder zusätzlich eine Recheneinheit. Die Auswerteeinheit ist bevorzugt eingerichtet, einen Wert des Zeitmessers zu empfangen oder auszulesen und den Zähler zurückzusetzen und zu starten. Sie ist bevorzugt eingerichtet, die einen Teil oder alle der nachfolgend genannten Berechnungen durchzuführen.

Der Zeitmesser ist bevorzugt ein Zähler, welcher ab dem Zeitpunkt des Zurücksetzens und Startens des Zählers einen Zählerwert gemäß einem, bevorzugt hochfrequenten, Takt permanent erhöht oder permanent reduziert. Der Zähler ist bevorzugt ein Software-Zähler, welcher bevorzugt mit einem Takt der Recheneinheit getaktet ist und eine Variable eines Zählerwerts mit jedem Takt um einen bestimmten gleichbleibenden Wert erhöht.

Zurücksetzen und Neustarten in Folge eines jeden Vorbeilaufens einer Inkrementmarke am Inkrementmaßsensor bedeutet bevorzugt, dass der Zeitmesser zurückgesetzt, d.h. z.B. auf Null gesetzt, und neu gestartet wird, sobald eine Inkrementmarke (z.B. ein Zahn einer Verzahnung) aufgrund der Drehung des Rotors den Inkrementmaßsensor passiert und hierdurch eine Signaländerung des Sensors eine Detektion der neu vorbeilaufenden Inkrementmarke erlaubt. Z.B. triggert das Sensorsignal ein TTL-Signal, sobald eine Zahnflanke einen definierten radialen Schwellwert durchläuft. Die aufsteigende Flanke des TTL-Signals startet einen hochfrequenten Softwarezähler mit konstanter Zeitschrittweite. Beim Durchlaufen der nächsten aufsteigenden TTL-Flanke wird der Zählerstand gespeichert und der Zähler erneut gestartet.

Eine Drehposition ist bevorzugt eine Lage des Rotors bezüglich des Stators. Eine Zwischendrehposition ist zum Beispiel eine Rotorlage mit einem Rotorwinkel von 2,5° oder 2,3° oder 2,6745° wenn z.B. bei 0° und bei 5° jeweils eine Inkrementmarke vorliegt und dazwischen keine Inkrementmarke, so dass die Inkrementmarken bei 0° und 5° benachbart sind.

In Abhängigkeit eines Wertes des Zeitmessers den Rotorparameter für eine Zwischendrehposition des Rotors zu bestimmen beinhaltet bevorzugt ein Abschätzen oder ein Vorhersagen einer Drehposition und/oder -geschwindigkeit oder -beschleunigung ausgehend von einer Drehposition, bei welcher das Vorbeilaufen einer Inkrementmarke festgestellt wurde. Bevorzugt werden mehrere verschiedene Rotorparameter bestimmt.

Hierfür wird bevorzugt zunächst mittels des Zeitmessers eine Messung der Zeitdifferenz zwischen den Zeitpunkten des Vorbeilaufens, bevorzugt der Detektion des Vorbeilaufens, zweier benachbarter Inkrementmarken durchgeführt, z.B. indem der Zählerwert, welchen der Zähler als letzten Wert vor dem Zurücksetzen aufweist, als Zeitdifferenz herangezogen wird. Aus der Zeitdifferenz und der Kenntnis der Anzahl der Inkrementmarken für einen bestimmten Winkelbereich (z.B. 30 Inkrementmarken für 360°) wird anschließend die mittlere Drehgeschwindigkeit für die Zeit der Drehung von der Inkrementmarke, welche vor der ersten Inkrementmarke am Sensor vorbeigelaufen ist, zur ersten der beiden Inkrementmarken berechnet. Dies erfolgt bevorzugt über die Formel

$$\dot{\alpha}(t_1 - t_0) = \frac{\alpha_1 - \alpha_0}{t_1 - t_0} \qquad\qquad (G1)$$

wobei

$\dot{\alpha}$: die Drehgeschwindigkeit [°/s] (z.B. unter Berücksichtigung der weiteren beispielhaften Werte: 12°/0,1s oder 120°/s),

$t_0$: der Zeitpunkt (z.B. Zählerstand, z.B. üblicherweise wegen des Zurücksetzens 0) des Vorbeilaufens der Inkrementmarke, welche vor der ersten Inkrementmarke am Sensor vorbeigelaufen ist,

$t_1$: der Zeitpunkt (z.B. Zählerstand, z.B. 100, woraus in Berücksichtigung des Takts von z.B. 1 kHz eine Zeitdifferenz von 0,1 s folgt) des Vorbeilaufens der ersten Inkrementmarke

$\alpha_0$: der Drehwinkel (z.B. 0°) zum Zeitpunkt $t_0$,

$\alpha_1$: der Drehwinkel (z.B. 12°) zum Zeitpunkt $t_1$ ist.

Die Winkeldifferenz $\alpha_1 - \alpha_0$ ist z.B. durch Kenntnis der Anzahl der Inkrementmarken für einen bestimmten Winkelbereich (z.B. bei 30 Inkrementmarken für 360° folgen 12° Winkeldifferenz) bekannt. $\alpha$ ist bevorzugt $\Phi$ oder $\varphi$. Z.B. werden zwei TTL-Flanken, mit Kenntnis der Zahnteilung, zum Berechnen der, bevorzugt mittleren, Drehzahl zwischen zwei Zähnen (Zahn - zu - Zahn) genutzt. Die Drehzahl wird bevorzugt mit dem Vorbeilaufen einer jeden Inkrementmarke, z.B. Zahn, erneut berechnet.

Bevorzugt wird, bevorzugt unter Einbeziehung der berechneten Drehgeschwindigkeit, ein Rotorparameter für eine Zwischendrehposition zwischen der ersten Inkrementmarke und der zweiten, der ersten Inkrementmarke benachbarten Inkrementmarke berechnet. Bevorzugt erfolgt eine Bestimmung des Drehwinkels für eine Zwischendrehposition, bevorzugt gemäß der Prädiktionsformel

$$\alpha(t^*) = \alpha(t_1) + \dot{\alpha}(t_1 - t_0) \cdot (t^* - t_1) \tag{G2}$$

besonders bevorzugt gemäß der Formel

$$\alpha(t^*) = \alpha(t_1) + \dot{\alpha}(t_1 - t_0) \cdot (t^* - t_1) + \frac{1}{2}\ddot{\alpha}(t_1 - t_0) \cdot (t^* - t_1)^2 \tag{G3}$$

wobei

$t^*$:      der Zeitpunkt, zu dem sich der Rotor in der Zwischendrehposition befindet,
$\ddot{\alpha}$:      die Beschleunigung des Rotors (zeitliche Ableitung der Drehgeschwindigkeit),
$\alpha(t_1)$:      der Drehwinkel zum Zeitpunkt t1 ist.

Die Zeitpunkte t0, t1 und t* sind jeweils durch den Zeitmesser, z.B. Zähler bekannt. Besonders bevorzugt erfolgt eine Bestimmung der Drehgeschwindigkeit- und/oder -Beschleunigung für die Zwischendrehposition z.B. durch einfache bzw. zweifache zeitliche Ableitung des Drehwinkels für die Zwischendrehposition. $\alpha$ ist bevorzugt $\Phi$, besonders bevorzugt $\varphi$. Die Bestimmung der Drehbeschleunigung in der Zwischendrehposition erfolgt bevorzugt alternativ oder zusätzlich durch eine Auswertung des Drehmoments eines Drehmomentsensors.

Bevorzugt wird somit über die Drehzahlsensorik aus der, bevorzugt mittleren, Drehzahl (und bevorzugt einer aus der Drehzahl oder der Momentenbilanz auf den Sensor ermittelten mittleren Beschleunigung) zwischen zwei Inkrementmarken, z.B. Zähnen, auf einen sich zukünftig entwickelnden Winkel innerhalb einer beliebigen Zwischendrehposition, z.B. Zahnlücke, geschätzt. Diese Winkelschätzung wird bevorzugt nach jeder Inkrementmarke, z.B. Zahn, die einen genauen Winkelabgleich darstellt, aktualisiert. Die Schätzung und Aktualisierung zwischen zwei Zähnen hat eine hohe Winkelgenauigkeit zur Folge.

Bei einer weiteren erfindungsgemäßen Vorrichtung ist die Auswerteeinheit eingerichtet, einen absoluten Drehwinkel als Rotorparameter mittels mindestens einer Induktivitätsmessung eines E-Motors, welcher mit dem Rotor gekoppelt ist oder zu welchem der Rotor gehört, zu bestimmen.

Bei einem weiteren erfindungsgemäßen Verfahren wird ein absoluter Drehwinkel als Rotorparameter mittels mindestens einer Induktivitätsmessung eines E-Motors, welcher mit dem Rotor gekoppelt ist oder zu welchem der Rotor gehört, bestimmt.

Hierdurch wird eine initiale Absolutwinkelmessung ermöglicht, die bereits beim Einschalten des Sensors ohne Notwendigkeit einer Kalibrierfahrt einen Wert für einen absoluten Drehwinkel, insbesondere einen absoluten Polwinkel bereitstellt. Mit dieser Information, insbesondere mit dem absoluten Polwinkel kann z.B. eine von Beginn effektive Kommutierung einer elektrischen Maschine aus dem Stillstand heraus erzielt werden.

Bevorzugt erfolgt eine initiale Winkelmessung eines absoluten Drehwinkels (z.B. absoluter Rotorwinkel oder absoluter Polwinkel für die Ermittlung der relativen Winkellage der Rotorpole gegenüber den Statorpolen beim Einschalten) mittels einer Impedanzmessung beim Einschalten der Vorrichtung.

Ein absoluter Drehwinkel ist z.B. ein absoluter Rotorwinkel (0 bis 360°, absolut in Bezug auf eine volle Rotorumdrehung) oder ein absoluter Polwinkel (0 bis 360°, absolut in Bezug auf eine Drehung des Rotors um 360°/P, P=Polpaarzahl).

Die Induktivität des Stators bei 0 rpm Rotordrehzahl ist eine Funktion des Rotorwinkels. Z.B. wird zur Bestimmung des absoluten Drehwinkels in die drei Phasen der Statorwicklung eine sinusförmige Testspannung aufmoduliert. Aus der Spannungsantwort wird die Impedanz ermittelt. Aus dieser wird mit Kenntnis der Testspannungsfrequenz die Induktivität und somit der Drehwinkel bestimmt. Dieses Verfahren liefert zwei um 180° verschobene Winkelinformationen. Um auf den realen Drehwinkel zu schließen, wird bevorzugt kurzzeitig ein positiver und im Anschluss kurzzeitig ein negativer d-Strom (q-Strom nahezu 0) eingeprägt, wobei d der Realteil des Stroms und q der Imaginärteil des Stroms im rotorfesten Koordinatensystem ist. Durch die Beobachtung der Induktivität wird dann auf den eindeutigen Rotorwinkel geschlossen.

Bei einer weiteren erfindungsgemäßen Vorrichtung weist diese zusätzlich eine bevorzugt drehfest mit der Inkrementalmaßverkörperung verbundene Absolutmaßverkörperung sowie einen der Absolutmaßverkörperung gegenüberliegend angeordneten Absolutmaßsensor auf.

Hierdurch wird eine initiale Absolutwinkelmessung auf eine zusätzliche oder alternative Weise im Vergleich zu einer Impedanzmessung ermöglicht.

Bevorzugt erfolgt eine initiale Winkelmessung eines absoluten Drehwinkels (z.B. absoluter Rotorwinkel oder absoluter Polwinkel für die Ermittlung der relativen Winkellage der Rotorpole gegenüber den Statorpolen beim Einschalten) mittels des Absolutmaßsensors beim Einschalten, bevorzugt mittels einer Abstandsmessung.

Eine Absolutmaßverkörperung weist bevorzugt diskrete Absolutmarken, besonders bevorzugt ein im Bereich, in welchem ein Absolutwert codiert wird, kontinuierliches Absolutmaß auf, welche bzw. welches durch den Absolutmaßsensor auslesbar oder messbar sind bzw. ist. Z.B. weist die Absolutmaßverkörperung ein Abstandsmaß (z.B. Geberkontur), eine optisch auswertbare Codescheibe oder kapazitive, induktive oder magnetische Codierungen auf. Sie ist bevorzugt axial neben der Inkrementalmaßverkörperung auf einer Radialfläche eines Geberrads oder radial inner- oder außerhalb der Inkrementalmaßverkörperung auf einer Axialfläche eines mit dem Rotor kinematisch, bevorzugt drehfest verbundenen Bauteils oder des Rotors selbst angeordnet. Die Absolutmaßverkörperung, z.B. Geberkontur, kodiert bevorzugt dabei den absoluten Winkel und bevorzugt die Drehrichtung bezogen auf einen elektrischen Pol. Bevorzugt ist die Anzahl der Paare von Minimal- und Maximalwerten der Absolutmaßverkörperung gleich der Polpaarzahl der elektrischen Maschine (z.B. Anzahl der Max/Min-Paare der Geberkontur = Polpaarzahl der elektrischen Maschine). Dies hat zwar zur Folge, dass kein eindeutiger absoluter Rotorwinkel bestimmbar ist, jedoch ist ein eindeutiger Polwinkel bestimmbar und dies mit einer höheren Genauigkeit (z.B. bei gleicher radialer Modulationsausmaß der Geberkontur). Eine Absolutmaßverköperung, inbesondere eine Geberradkontur, ist bevorzugt so gestaltet, dass eine Drehrichtung detektierbar ist. Z.B. ist ein Abstandsmaß (bis auf einen Bereich eines Sprungs) in eine Richtung stets abnehmend und in die andere Richtung stets zunehmend.

Ein Absolutmaßsensor ist bevorzugt eingerichtet, aus einer Absolutmarke einen absoluten Drehwinkel, bevorzugt auch eine Drehrichtung, zu bestimmen oder ein Signal auszugeben, mittels welchem die Auswerteeinheit einen absoluten Drehwinkel, bevorzugt auch eine Drehrichtung, bestimmt.

Bevorzugt erfolgt die Bestimmung des Rotorparameters für eine Drehposition mittels der Inkrementmarke oder für eine Zwischendrehposition zusätzlich in Abhängigkeit des absoluten Drehwinkels. Z.B. wird der absolute Drehwinkel zum Zeitpunkt t1 als $\alpha(t_1)$ in G2 und G3 verwendet. Bevorzugt wird zusätzlich mit Hilfe der Kenntnis der Zahnteilung $\alpha(t_1)$ noch genauer bestimmt. Zum Beispiel ist die Genauigkeit $\Delta a$ (z.B. $\pm 1°$) der Erkennung des absoluten Drehwinkels mittels der Absolutmaßverkörperung geringer als die Genauigkeit $\Delta r$ der Erkennung Inkrementmarke (z.B. $\pm 0,5°$). Mittels Kombination des mit einer Ungenauigkeit von $\Delta a$ (z.B. $\pm 1°$) messbaren absoluten Drehwinkels $\tilde{\alpha}(t_1)$ (z.B. 39,8°) zum Zeitpunkt des Vorbeilaufens einer Inkrementmarke und der Kenntnis der Inkrementmarkenunterteilung $\Delta i$ (z.B. 360° / 100 Marken, erste Marke bei 0°) wird $\alpha(t_1)$ bestimmt (z.B. gemäß

$$\alpha(t_1) = R(\frac{\tilde{\alpha}(t_1)}{\Delta i}) \cdot \Delta i + \Delta r \quad , \tag{G4}$$

wobei $R(x)$ ein Rundungsoperator ist, welcher hin zur nächsten ganze Zahl rundet. Z.B. erhält man dann den genaueren absoluten Drehwinkel 39,6°±0,5° anstatt zuvor 39,8°±1°). Dies ist besonders vorteilhaft, wenn z.B. die Messung des absoluten Drehwinkels in ihrer Genauigkeit auf Sensor- und/oder Codiertoleranzen, z.B. die Abstandstoleranzen einer Geberkontur, limitiert ist.

Bei der erfindungsgemäßen Vorrichtung weist die Absolutmaßverkörperung eine Geberkontur auf und der Absolutmaßsensor ist ein Abstandssensor, welcher eingerichtet ist, einen Abstand zu der Geberkontur zu messen.

Der Einsatz eines Abstandssensors in Verbindung mit einer Geberkontur ist eine einfache, kostengünstige Lösung zur Winkelmessung, denn Abstandssensoren sind als funktional komplette Einheiten günstig zu beschaffen und einfach sowie flexibel einsetzbar. Bevorzugt ist die Vorrichtung zur berührungslosen Winkelmessung geeignet, indem die vorhandenen Abstandssensoren eingerichtet sind, den Abstand zur Maßverkörperung berührungslos zu messen.

Die Vorrichtung weist bevorzugt einen oder mehrere Abstandssensoren auf, wobei die vorhandenen Abstandssensoren eingerichtet sind, einen Abstand zu der Geberkontur zu messen und einen Wert für den gemessenen Abstand als Signal auszugeben, wobei die vorhandenen Abstandssensoren am Stator angeordnet sind, wenn die Geberkontur am Rotor angeordnet ist, oder die vorhandenen Abstandssensoren am Rotor angeordnet sind, wenn die Geberkontur am Stator angeordnet ist. Wenn nur ein Abstandssensor vorhanden ist, bezieht sich die Nennung der vorhandenen Abstandssensoren auf den einen vorhandenen Abstandssensor.

Die Geberkontur ist bevorzugt ein Bauteil, welches bzgl. der Rotationsachse des Rotors ein radiales und/oder axiales, winkelabhängiges Abstandsmaß, bevorzugt mittels einer Fläche, verkörpert. Z. B. weist sie eine Oberfläche als Kontur auf, die einen je nach Winkelstellung des Rotors variierenden radialen Abstand zur Rotationsachse oder axialen Abstand zu einem axialen Fixpunkt aufweist. Bevorzugt weist die Geberkontur ein Maximum und ein Minimum auf, in denen das Abstandsmaß maximal und minimal ist, besonders bevorzugt eine Anzahl von Paaren bestehend aus einem Maximum und einem Minimum gleich der Anzahl der Polpaare des E-Motors. Bevorzugt liegt ein Maximum direkt neben einem Minimum mit einem Sprung als Übergang. Die Geberkontur ist z.B. eine bevorzugt ringförmige Scheibe/(Hohl-)-Zylinder deren/dessen äußere und/oder innere Mantelfläche das winkelabhängige Maß als Kontur verkörpert oder sie ist eine Freiform (bzw. ein Freiformbauteil) mit speziell gewählter Oberflächenform oder Oberflächenformen, z.B. einer Außen- und/oder Innenkontur, welche das winkelabhängige Maß als Kontur verkörpert. Alternativ oder zusätzlich kann das Maß z.B. durch die Ober- und/oder Unterseite (axiale Stirnfläche) einer Scheibe oder eines Zylinders oder einer Freiform verkörpert sein

Als Abstandssensor ist z.B. ein Abstandssensor mit einem oder einer beliebigen Kombination folgender Messprinzipien möglich: induktiv, optisch (z.B. Infrarot oder Laser), akustisch, kapazitiv, Hall-Abstandssensor, Triangulation. Es ist auch ein Abstandssensor mit einem Berührungsfühler möglich, der die Geberkontur abtastet und aus dessen mechanischer Verformung oder Auslenkung die Abstandsmessgröße bestimmt wird. Besonders bevorzugt sind kommerziell verfügbare Abstandssensoren. Bevorzugt ist der Abstandssensor eingerichtet, den Abstand zu der Geberkontur bei Stillstand und bei Drehung des Rotors zu messen. Ein Abstandssensor gibt ein Signal aus, welches bevorzugt proportional zum Abstand zur Geberkontur ist. Das Signal ist bevorzugt zur weiteren Verwendung digital codiert. Die zur Ausgabe des Signals notwendige Schaltungstechnik ist bevorzugt in dem Abstandssensor, z.B. auf einer Platine des Sensors oder in einem Bauteilgehäuse des Sensors integriert. Schaltungstechnischer Aufwand wird somit in den Sensor verlagert und ohne anwendungsspezifischen schaltungstechnischen Aufwand ein winkelabhängiges Signal erhalten. Dieses ist je nach Anwendung eine Spannung, ein Strom oder ein digitales Signal. Bevorzugt liegen die vorhandenen Abstandssensoren der Geberkontur gegenüber. Z.B. liegt ein Abstandssensor mit einer axial angeordneten Geberkontur auf einer axialen Linie (d.h. zur Rotationsachse parallelen Linie) und bei einer radial angeordneten Geberkontur liegt diese mit dem Abstandssensor auf einer radialen Linie. Bevorzugt ist der Bereich des Sensors, welcher die Messsignale zur Abstandsmessung aussendet und/oder empfängt, d.h. der Messkopf, auf die Geberkontur gerichtet.

Ein Abstand zur Geberkontur ist bevorzugt eine, besonders bevorzugt die kürzeste Strecke zwischen dem Abstandssensor und der Geberkontur.

Bei einer weiteren erfindungsgemäßen Vorrichtung sind der Inkrementmaßsensor und der Absolutmaßsensor gegeneinander um einen Winkel im Bereich von 45° bis < 180° versetzt.

Hierdurch werden Messfehler bei einer Messung eines absoluten Drehwinkels mittels des Absolutmaßsensors besonders wirksam reduziert, da zwei verschiedene Richtungskomponenten eines Versatzes messbar sind und da auch eine vergleichsweise einfach zu berechnende gegenseitige Kompensation beider Sensoren möglich ist. Besonders bevorzugt sind Inkrementmaßsensor und der Absolutmaßsensor gegeneinander um 90° versetzt. Bevorzugt wird ein radialer oder axialer Versatz der Inkrementalmaßverkörperung und/oder der Absolutmaßverkörperung durch die Sensorik detektiert und mittels eines Softwarealgorithmus kompensiert. Besonders bevorzugt wird ein radialer Versatz (z.B. y) gegenüber dem einen Sensor, insbesondere gegenüber dem Absolutmaßsensor, mittels dieses Sensors detektiert, und es wird in Abhängigkeit des detektierten Versatzes eine Kompensation des durch den Versatz bedingten Drehwinkelfehlers (z.B. a) der durch den anderen Sensor, insbesondere durch den Inkrementmaßsensor, durchgeführten Drehwinkelmessung durchgeführt. Dies ist insbesondere bei einem Versatzwinkel der Sensoren von 90° sehr vorteilhaft, da hierdurch ein einfach zu lösender trigonometrischer Zusammenhang zwischen dem mittels des einen Sensors gemessenen Versatzes und dem Drehwinkelfehler an dem anderen Sensor vorliegt:

$$a = \arctan(y/r), \hspace{5cm} (G5)$$

wobei

    a: der Drehwinkelfehler am anderen Sensor, bevorzugt in [°],
    y: der mittels des einen Sensors detektierte Differenzbetrag und
    r: der Radius der dem anderen Sensor zugeordneten Maßverköperung ist.

Alternativ ist zur Abschätzung des Drehwinkelfehlers anstatt der arctan-Funktion in (G5) auch die arcsin-Funktion verwendbar (z.B. wenn dies einfacher zu berechnen ist):

$$a = \arcsin(y/r). \hspace{5cm} (G5')$$

Z.B. wird ein Versatz gegenüber einem Absolutmaß- oder Inkrementmaßsensor zunächst detektiert, indem mindestens ein minimaler und/oder maximaler gemessener Sensorwert mit einem minimalen und/oder maximalen Referenzsensorwert verglichen wird. Ein minimaler oder maximaler Sensorwert (z.B. Abstand bei einem Abstandssensor) ist z.B. ein solcher minimaler oder maximaler Sensorwert, der zu Beginn, als die Messvorrichtung noch korrekt eingestellt war, vorlag. Er kann z.B. durch eine Referenzfahrt bestimmt und gespeichert worden sein. Alternativ oder zusätzlich kann er auch durch einen Sollwert gegeben sein, z.B. durch die Baupläne bestimmt sein. Sofern der gemessene minimale oder maximale Sensorwert von dem minimalen oder maximalen Referenzsensorwert um einen Differenzbetrag abweicht, liegt eine Dejustage vor, die ohne Kompensation zu einem Drehwinkelfehler führt. Anhand des Differenzbetrags wird der Drehwinkelfehler daher kompensiert.

Bei einem Abstandssensor erfolgt die Kompensation z.B. durch Verschiebung der gemessenen Sensorwerte nach oben oder unten, bevorzugt um den Differenzbetrag zwischen einem Abstandsmaximum und/oder -minimum und einem Referenzabstandsmaximum und/oder -minimum. Alternativ oder zusätzlich erfolgt anhand dieses Differenzbetrags eine Berechnung des Drehwinkelfehlers a der Drehwinkelmessung, welche durch den 90° gegenüber dem Abstandssensor versetzten Inkrementmaßsensor durchgeführt wird. Die Berechnung erfolgt gemäß Gleichung G5 oder G5' mit a als dem Drehwinkelfehler der Messung durch den Inkrementmaßsensor, y als dem mittels des Abstandssensors gemessenen Differenzbetrag und r als dem Radius der Inkrementalmaßverkörperung. Der Drehwinkelfehler wird dann von dem mittels des Inkrementsensors bestimmten Drehwinkel bevorzugt entsprechend dem Vorzeichen des Differenzbetrags abgezogen oder addiert oder ein Detektionsschwellwert wird nach oben oder unten verschoben, bevorzugt um den Differenzbetrag und entsprechend dessen Vorzeichen.

Bevorzugt werden mindestens zwei verschiedene Richtungskomponenten eines Versatzes gemessen, eine Komponente mittels des Inkrementmaßsensors und die andere Komponente mittels des Absolutmaßsensors, und der Versatz wird bezüglich beider Richtungskomponenten kompensiert.

Bei einer weiteren erfindungsgemäßen Vorrichtung ist der Rotorparameter oder einer der Rotorparameter ein Drehwinkel und die Auswerteeinheit ist eingerichtet, nach einem Bestimmen eines absoluten Drehwinkels auf eine absolute Drehwinkelbestimmung auf der Basis der Inkrementalmaßverkörperung umzuschalten.

Somit kann nach einem Bestimmen eines absoluten Drehwinkels, z.B. nach Durchlauf einer Referenzmarke, von der initialen Winkelmessung basierend auf der Absolutmaßverkörperung mit geringer Genauigkeit auf die Winkelprädiktion basierend auf der Inkrementalmaßverkörperung mit hoher Genauigkeit umgeschaltet werden. Dies ist besonders vorteilhaft, wenn die Genauigkeit der Absolutmaßverkörperung (z.B. $\pm 4°$) geringer ist, als die Drehwinkelabstände der Inkrementmarken (z.B. bei 360° / 100 Marken: 3,6°). Zudem ist dann nur noch ein Sensor zur genauen Winkelmessung nötig, was Energie einspart.

Ein Bestimmen eines absoluten Drehwinkels erfolgt z.B. mittels der bereits beschriebenen Impedanzmessung eines E-Motors und/oder mittels einer Detektion einer Referenzmarke.

Bevorzugt wird der Bestimmung des Rotorparameters basierend auf der Inkrementalmaßverkörperung der Wert des absoluten Drehwinkels übergeben.

Eine Referenzmarke ist bevorzugt eine mit im Vergleich zu z.B. der Absolutmaßverköperung hoher Präzision messbare Markierung in einer Maßverkörperung. Dies ist z.B. am Ende einer Geberkonturrampe der diskrete Sprung (von Max zu Min) und bevorzugt eine dem Sprung eindeutig zuordenbarer Inkrementmarke der Inkrementalmaßverkörperung, z.B. Zahn des Zahnrades. Alternativ oder zusätzlich ist die Referenzmarke ein absichtlich eingebrachter größerer Abstand (z.B. eine oder mehrere Zahnlücken) zwischen Inkrementmarken. Bevorzugt ist die Anzahl der Referenzmarken einer Maßverkörperung gleich der Anzahl der Polpaare der elektrischen Maschine. Auf diese Weise markieren die Referenzmarken jeweils einen absoluten Polwinkel. Dies hat zwar zur Folge, dass kein eindeutiger absoluter Rotorwinkel bestimmbar ist, jedoch ist ein eindeutiger Polwinkel bestimmbar und dies mit einer höheren Genauigkeit (z.B. bei gleicher radialer Modulation der Geberkontur).

Bevorzugt wird zur Verringerung von Drehungleichheiten eines Rotors eines E-Motors oder eines mit dem Rotor des E-Motors kinematisch, bevorzugt drehfest verbundenen Rotors, bevorzugt in einem Antriebsstrang, ein- Ansteuern des E-Motors in Abhängigkeit des Rotorparameters zur Erzeugung eines schwingungsdämpfenden Moments auf den Rotor durchgeführt.

Hierdurch werden Drehungleichheiten in einem Antriebsstrang vermindert.

Bevorzugt werden die nach einem Schwingungsdämpfer in einem hybridisierten Antriebsstrang vorhandenen Rest-Drehungleichförmigkeiten mit einem Gegenmoment nach dem physikalischen Prinzip der destruktiven Interferenz reduziert oder eliminiert. Zur Bestimmung dieses Gegenmomentes wird die aktuelle Drehzahl als Rotorparameter der elektrischen Maschine bevorzugt mit einer Unsicherheit < 1 U/min genau gemessen. Das Messen erfolgt bevorzugt mittels der erfindungsgemäßen Vorrichtung und/oder des erfindungsgemäßen Verfahrens. Bevorzugt erfolgt das Ansteuern des E-Motors in Abhängigkeit des Rotorparameters zur Erzeugung eines schwingungsdämpfenden Moments auf den Rotor gemäß dem in der DE 10 2012 209 275 A1 beschriebenen Verfahren gemäß insbesondere der dortigen Ansprüche 2-10 und Fig. 2.

Kinematisch verbunden bedeutet bevorzugt, dass sich in Folge einer Drehung eines Bauteils das kinematisch verbundene Bauteil dreht.

Die Erfindung wird nun anhand von Zeichnungen beispielhaft veranschaulicht. Es zeigen:

Fig. 1a, 1b, 1c eine erfindungsgemäße Vorrichtung zur Messung eines Rotorparameters oder mehrerer Rotorparameter in Zuständen mit verschiedenen Rotorwinkeln,
Fig. 2 ein Diagramm zur Veranschaulichung der Schritte des Erfassens eines Vorbeilaufens einer Inkrementmarke, des Startens eines Zeitmessers einer Auswerteeinheit und des Zurücksetzens und Startens des Zeitmessers,
Fig. 3a, 3b, 3c verschiedene Ansichten einer Vorrichtung aufbauend auf Fig. 1, wobei die Vorrichtung zusätzlich eine Absolutmaßverkörperung sowie einen der Absolutmaßverkörperung gegenüberliegend angeordneten Absolutmaßsensor aufweist,
Fig. 4 ein Diagramm zur Veranschaulichung des Schritts des Messens eines absoluten Drehwinkels,
Fig. 5 eine Anordnung von Inkrementmaßsensor und Absolutmaßsensor mit einem gegenseitigen Versatz von 90° und einer angedeuteten Dejustage,
Fig. 6 ein Diagramm zur Veranschaulichung der rechnerischen Kompensation der in Fig. 5 gezeigten Dejustage.

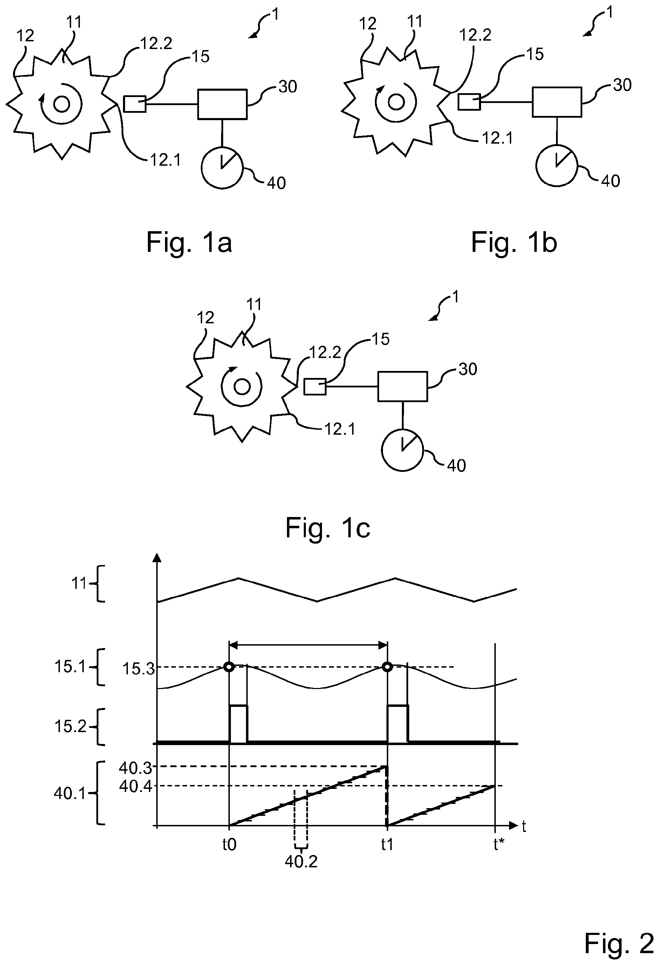

Fig. 1a, 1b, 1c zeigen eine erfindungsgemäße Vorrichtung 1 zur Messung eines Rotorparameters oder mehrerer Rotorparameter in Zuständen mit verschiedenen Rotorwinkeln. Die Vorrichtung 1 weist eine drehfest mit einem Rotor verbundene Inkrementalmaßverkörperung 11 mit Inkrementmarken 12 auf. Der Inkrementalmaßverkörperung 11 gegenüber ist ein Inkrementmaßsensor 15 angeordnet. Hier ist sie eine Verzahnung und eine Inkrementmarke 12 ein Zahn. Die Vorrichtung 1 weist weiterhin eine mit dem Inkrementmaßsensor 15 verbundene Auswerteeinheit 30 und einen mit der Auswerteeinheit verbundenen Zeitmesser 40 auf. Zwei oder alle drei der Komponenten Auswerteeinheit 30, Zeitmesser 40 und Inkrementmaßsensor 15 können als integrale Baueinheit vorliegen. Der Zeitmesser 40 ist eingerichtet, durch ein Vorbeilaufen einer jeden Inkrementmarke 12 zurückgesetzt und neu gestartet zu werden, z.B. mittels der Auswerteeinheit 30. Die Auswerteeinheit 30 ist eingerichtet, einen Rotorparameter, z.B. den Rotorwinkel für eine Zwischenposition, wie sie in Fig. 1b gezeigt ist, zu bestimmen. Die Zwischenposition liegt zwischen einer ersten Drehposition, die der Rotor zum Zeitpunkt des Vorbeilaufens einer ersten Inkrementmarke 12.1 eingenommen hat, wie in Fig. 1 a gezeigt, und einer zweiten Drehposition, die der Rotor zum Zeitpunkt des Vorbeilaufens einer zweiten Inkrementmarke 12.2 eingenommen hat, wie in Fig. 1c gezeigt. Der Zeitpunkt des Vorbeilaufens der ersten bzw. zweiten Inkrementmarke 12.1 bzw. 12.2 ist z.B. der Zeitpunkt, an welcher die Auswerteeinheit das Vorbeilaufen der entsprechenden Inkrementmarke 12.1 bzw. 12.2 detektiert.

Fig. 2 zeigt ein Diagramm zur Veranschaulichung einer konkreten Durchführungsmöglichkeit der Schritte des Erfassens eines Vorbeilaufens einer Inkrementmarke 12, des Startens eines Zeitmessers 40 einer Auswerteeinheit 30 und des Zurücksetzens und Startens des Zeitmessers 40, z.B. mittels einer Vorrichtung gemäß Fig. 1a, 1b und 1c. Das Diagramm zeigt den zeitlichen Verlauf der Inkrementalmaßverkörperung 11 (hier am Beispiel der Sägezahnförmigen Inkrementalmaßverkörperung 11 aus Fig. 1a bis 1c) aus Sicht des Inkrementmaßsensors 15, des Inkrementmaßsensorsignals 15.1, darunter eines aufbereiteten Signals 15.2 und darunter eines Zeitmessersignals 40.1 des Zeitmessers 40 mit einer zeitlichen Auflösung 40.2. Der Zeitmesser 40 ist ein getakteter Softwarezähler und das Zeitmessersignal 40.1 ein zeitlich variabler Zählerstand. Der Inkrementmaßsensor 15 gibt ein Signal 15.1 aus, welches in etwa proportional zur Kontur der Verzahnung ist. Mittels Vergleichs des Signals 15.1 mit einem Schwellwert 15.3 mittels einer der Auswerteeinheit oder dem Sensor 15 zugeordneten oder in diese integrierte TTL-Schaltung wird das aufbereitete Signal 15.2 erzeugt. Die TTL-Schaltung gibt ein "High"-Signal aus, sofern das Signal 15.1 oberhalb des Schwellwerts liegt und sich somit eine Inkrementmarke 12 im Messbereich des Inkrementmaßsensors 15 befindet. Andernfalls wird ein "Low"-Signal ausgegeben. Zum Zeitpunkt t* befindet sich der Rotor in einer Zwischendrehposition, in welcher sich keine Inkrementmarke 12 im Messbereich des Sensors 15 befindet, wie in Fig. 1b gezeigt. Die erste Inkrementmarke 12.1 ist zum Zeitpunkt t1 an dem Sensor 15 vorbeigelaufen, wie in Fig. 1a gezeigt, und die zweite Inkrementmarke 12.2 ist noch nicht am Sensor 15 vorbeigelaufen. Zum Zeitpunkt t0 ist die der ersten Inkrementmarke vorhergehende Inkrementmarke 12.1 am Sensor 15 vorbeigelaufen. Bei Detektion eines Umschaltens des Signals 15.2 auf einen "High"-Pegel wird der erreichte Zählerstand gespeichert, der Zähler zurückgesetzt und neu gestartet. Zum Zeitpunkt t* erfolgt z.B. eine Berechnung des geschätzten Rotorwinkels zum Zeitpunkt t* als Rotorparameter, indem zunächst der erreichte Zählerstand 40.3 zum Zeitpunkt t1 verwendet wird, um eine mittlere Rotorwinkelgeschwindigkeit im Zeitbereich von t0 bis t1 zu berechnen, z.B. gemäß der in der Beschreibung genannten Formel G1. Dann wird der Drehwinkel zum Zeitpunkt t* auf der Basis der berechneten Rotorwinkelgeschwindigkeit und des erreichten Zählerstands 40.3 zum Zeitpunkt t* bestimmt, z.B. gemäß der in der Beschreibung genannten Formel G2 oder G3.

Hierdurch ist sogar in Zwischenpositionen eine genaue Bestimmung z.B. des Rotorwinkels möglich.

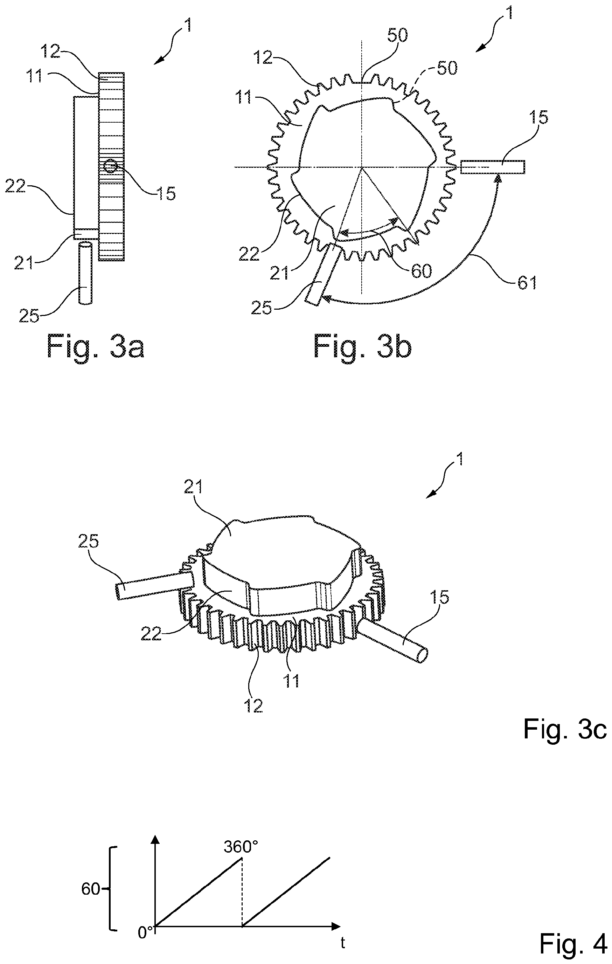

Fig. 3a, 3b, 3c zeigen verschiedene Ansichten einer Vorrichtung 1 aufbauend auf Fig. 1, wobei die Vorrichtung 1 zusätzlich eine Absolutmaßverkörperung 21 sowie einen der Absolutmaßverkörperung 21 gegenüberliegend angeordneten Absolutmaßsensor 25 aufweist. Der Rotor ist mit einer elektrischen Maschine aufweisend sechs Polpaare verbunden oder er ist der Rotor der elektrischen Maschine. Die Absolutmaßverkörperung 21 weist eine Geberkontur 22 auf und der Absolutmaßsensor 25 ist ein Abstandssensor, welcher eingerichtet ist, einen Abstand zu der Absolutmaßverkörperung 21 zu messen. Die Geberkontur 22 weist einen radial veränderlichen Abstand auf sowie umlaufend angeordnet sechs sich wiederholende Bereiche mit je einem minimalen und einem maximalen radialen Abstand vom Mittelpunkt der Achse, an welcher die Kontur angebracht ist. Die Bereiche decken jeweils einen Rotorwinkelbereich von hier 60° ab, welcher auch durch ein Polpaar der elektrischen Maschine abgedeckt wird. Dieser Winkelbereich entspricht einem Polwinkelbereich eines Polwinkels 60 der elektrischen Maschine von 360°. Der Inkrementmaßsensor 15 und der Absolutmaßsensor 25 sind gegeneinander um einen Winkel 61 im Bereich von 45° bis < 180° versetzt, hier in etwa 120°. Die Inkrementalmaßverkörperung 12 weist eine Referenzmarke 50 in Form einer im Gegensatz zu den üblichen Zahnlücken breite Zahnlücke auf. Alternativ oder zusätzlich zu der Referenzmarke 50 können weitere Zahnlücken eine Referenzmarke bilden und/oder eine/oder mehrere Rampen oder Sprünge in der Geberkontur bilden eine Referenzmarke (gestrichelt angedeutet. Die Auswerteeinheit 30 ist eingerichtet, nach der Detektion der Referenzmarke 50 auf eine absolute Drehwinkelbestimmung auf der Basis der Inkrementalmaßverkörperung 12 umzuschalten.

Fig. 4 zeigt ein Diagramm zur Veranschaulichung des Schritts des Messens eines absoluten Drehwinkels. Es wird ein dem Polwinkel 60 näherungsweise entsprechendes Abstandssignal gemessen und als Polwinkel 60 verwendet. Beim Start der elektrischen Maschine oder der Messung misst der Abstandssensor 25 einen Abstand zur Geberkontur 22. Aus diesem Abstand, welcher umfangsmäßig nur sechs Mal vorliegt, wird dann eindeutig innerhalb eines Polwinkelbereichs von 360° auf den momentanen Polwinkel 60 als Rotorparameter geschlossen. Dieser Abstand verändert sich periodisch, wie in dem Diagramm gezeigt ist. Am Übergang von einem Bereich zum nächsten erfolgt ein Sprung. Währenddessen wird bereits mittels des Inkrementmaßsensors 15 und der Inkrementalmaßverkörperung 11 wie in Fig. 1a, 1b, 1c und 2 eine Inkrementalmessung, z.B. zur Berechnung der Rotordrehzahl durchgeführt. Sobald die Referenzmarke 50 an dem Inkrementmaßsensor 15 vorbeiläuft, wird diese genaue Absolutposition als Absolutwertinformation übernommen und die durch den Abstandssensor erhaltene Absolutwertposition damit korrigiert. Nun kann allein anhand der Inkrementalmaßverkörperung eine Rotorparameterbestimmung erfolgen, mittels welcher entweder für einen Polwinkelbereich von 360° oder einen Rotorwinkelbereich von 360° eindeutige und in der Genauigkeit der Zeitauflösung der Prädiktion genaue Winkel und/oder Winkelgeschwindigkeiten und/oder Winkelbeschleunigungen auch in Zwischendrehpositionen bestimmt werden.

Hierdurch wird insbesondere eine Absolutwinkelinformation mit dem Einschalten der Messvorrichtung erhalten, so dass bereits im Zeitraum vor dem Vorbeilaufen einer Referenzmarke 50 eine effektive Regelung der E-Maschine stattfinden kann. Das Umschalten auf die Bestimmung von Rotorparametern auf Prädiktion mittels der Inkrementalmaßverkörperung erlaubt dann eine sehr hohe Präzision. Es wird ein zur Kommutierung notwendiger absoluter Polwinkel bereits zu Beginn erhalten (initial). Ein absoluter Polwinkel mit hoher Genauigkeit (Winkelprädiktion) wird nach Erreichen der Referenzmarke erhalten, wodurch auch eine zur Gegenanregung notwendige kombinierte Drehzahl- und Winkelerfassung mit hoher Genauigkeit erfolgen kann.

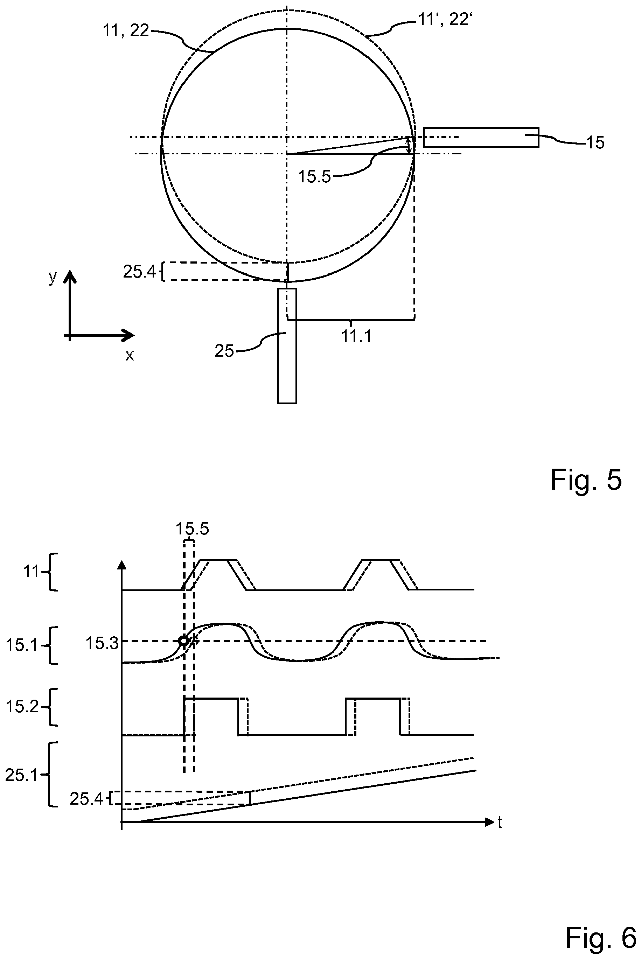

**Fig.** 5 zeigt eine Anordnung von Inkrementmaßsensor 15 und Absolutmaßsensor 25 mit einem gegenseitigen Versatz von 90° und einer angedeuteten Dejustage. Ursprünglich waren die Geberkontur 22 und die Inkrementalmaßverkörperung 11 zentriert (angedeutet durch den gestrichelten Kreis 11', 22'). Es hat sich ein radialer Versatz in y-Richtung um eine Abstandsdifferenz y 25.4 eingestellt, bedingt durch z.B. Unwucht (umlaufender Fehler der eine taumelnde Bewegung erzeugt) oder wie hier dargestellt einen Achsversatz (fester Fehler). Dieser führt bei der Messung des Drehwinkels durch den Inkrementmaßsensor 15 an einem Punkt der Inkrementalmaßverköperung 11 mit einem Radius r 11.1 zu einem Winkelfehler a 15.5.

Fig. 6 zeigt ein Diagramm zur Veranschaulichung der rechnerischen Kompensation der in Fig. 5 gezeigten Dejustage. Die Inkrementalmaßverkörperung 11 weist Zähne mit Zahnlücken auf. Der zeitliche Verlauf der Inkrementalmaßverköprerung 11 aus Sicht des Sensors 15 ist als oberster Graph dargestellt, darunter gefolgt von dem Inkrementmaßsensorsignal 15.1 mit Schwellwert 15.3 und dem aufbereiteten TTL Signal 15.2. Zuletzt ist auch noch der Verlauf des Absolutmaßsensorsignals 25.1 abgetragen. Mit gestrichelten Linien sind jeweils die Graphen eingezeichnet, welche sich im ursprünglichen, korrekt justierten Zustand ergeben hätten. Mit durchgezogenen Linien sind jeweils die Graphen eingezeichnet, welche sich ohne Kompensation im dejustierten Zustand ergeben. Es ist ersichtlich, dass sich für den mittels des Inkrementmaßsensors 15 gemessenen Drehwinkel ein Drehwinkelfehler a 15.5 ergibt. Aus der Dejustage ergibt sich ein Offset des Absolutmaßsensorsignals 25.1 in Höhe der Abstandsdifferenz y 25.4.

Zur Kompensation des Winkelfehlers a 15.5 wird mittels eines Extremwertvergleichs eines oder mehrerer Extremwerte (Min/Max) von einem gespeicherten Referenzverlauf (z.B. ein direkt nach der korrekten Einjustierung gespeicherter Signalverlauf, mit gestrichelter Linie eingezeichnet) mit dem jetzigen Absolutmaßsensorsignal 25.1 (mit durchgehender Linie eingezeichnet) die Abstandsdifferenz y 25.4 bestimmt. Diese wird zur Winkelfehlerkompensation des Drehwinkels am Inkrementmaßsensor 15 über eine trigonometrische Funktion, z.B. G5 oder G5', genutzt. Bevorzugt wird ein eventueller Radialversatz in x-Richtung durch eine Adaption der Auslöseschwelle 15.3 im Analogsignal 15.1 des Drehzahlsensors kompensiert.

Hierdurch können Dejustagen effektiv und mit wenig Aufwand kompensiert werden.

Mit der Erfindung wurde eine Messvorrichtung für einen Rotor vorgestellt, bei welcher über Inkrementmarken, z.B. Zahnflanken einer Zahnradkontur, auf die Winkelgeschwindigkeit des Rotors geschlossen wird, z.B. durch TTL-Messungen eines Sensors. Die Vorrichtung weist hierfür einen Inkrementmaßsensor auf. Die Vorrichtung weist eine auf der Drehachse bereitgestellte Absolutmaßverkörperung, z.B. eine koaxiale Geberkontur auf. Die Geberkontur ist umfangsmäßig radial variabel. Durch Abstandsmessungen eines entsprechenden Absolutmaßsensors kann auf die absolute Position bzw. einen absoluten Drehwinkel (entweder bezüglich einer Gesamtumdrehung oder über Teilbereiche einer Gesamtdrehung), des Geberrads geschlossen werden. Da die Geberradkontur mit der Anzahl der Polpaare des E-Motors korrespondiert, kann bei gleichbleibendem Ausmaß der Variation der Geberradkontur mit einer noch höheren Genauigkeit und ohne Zwischenberechnungen auf die relative Lage der Pole des Rotors des E-Motors zum Stator geschlossen werden. Durch eine bevorzugte Referenzmarke auf dem Umfang von Zahnrad- oder Geberradkontur kann auf die absolute Position des Rotors zu einem bestimmten Zeitpunkt geschlossen werden. Alternativ kann die Absolutmaßverkörperung auch eine axiale Geberkontur aufweisen, welche entsprechend axial variabel ist. Vorteilhafterweise sind Abstandsmesser und Drehzahlmesser zueinander in einem Winkel zwischen 45° und < 180° beabstandet. Auf diese Weise kann ein Radial- oder Axialversatz, der aufgrund von Unwucht oder Achsversatz entsteht, oder ein radialer oder axialer Versatz zwischen Geberkontur und Zahnradkontur, der in einem "Eiern" resultieren würde, ermittelt und softwareseitig ausgeglichen werden.

Durch Ermittlung der aktuellen Winkelgeschwindigkeit und ihrer zeitlichen Änderung kann auf Grundlage der Zahnradkontur und bevorzugt der Referenzmarke auf eine aktuelle Position des Rotors auch zwischen zwei Inkrementmarken, z.B. Flanken der Zahnradkontur, geschlossen werden. Über die Geberkontur kann darüberhinaus zum Startzeitpunkt bereits eine relative Position zwischen Rotor und Stator ermittelt werden.

Bevorzugt wird diese genaue Drehzahlinformation genutzt, um Restdrehungleichmäßigkeiten nach einem Schwingungsdämpfer durch gezieltes Ansteuern des E-Motors im Hybridstrang zu verringern.

**Bezugszeichenliste**

| | |
|---|---|
| 1 | Vorrichtung zur Messung eines Rotorparameters |
| 11 | Inkrementalmaßverkörperung |
| 11.1 | Radius r der Inkrementalmaßverkörperung |
| 12 | Inkrementmarke |
| 12.1 | erste Inkrementmarke |
| 12.2 | zweite, der ersten Inkrementmarke benachbarte Inkrementmarke |
| 15 | Inkrementmaßsensor |
| 15.1 | Inkrementmaßsensorsignal |
| 15.2 | Aufbereitetes Signal |
| 15.3 | Schwellwert |
| 15.5 | Winkelfehler a |
| 21 | Absolutmaßverkörperung |
| 22 | Geberkontur |
| 25 | Absolutmaßsensor |
| 25.1 | Absolutmaßsensorsignal |
| 25.4 | Abstandsdifferenz y |
| 30 | Auswerteeinheit |
| 40 | Zeitmesser |
| 40.1 | Zeitmessersignal |
| 40.2 | zeitliche Auflösung |
| 40.3 | Zählerstand bei t1 |
| 40.4 | Zählerstand bei t* |
| 50 | Referenzmarke |
| 60 | Polwinkel |
| 61 | Versatzwinkel |

**Patentansprüche**

1. Vorrichtung (1) zum Messen eines Rotorparameters oder mehrerer Rotorparameter eines Elektromotors, wobei die Vorrichtung aufweist:

eine drehfest mit einem Rotor oder Stator verbundene Inkrementalmaßverkörperung (11) mit Inkrementmarken (12),

einen der Inkrementalmaßverkörperung (11) gegenüberliegend angeordneten Inkrementmaßsensor (15), welcher an dem Stator angeordnet ist, wenn die Inkrementalmaßverkörperung drehfest mit dem Rotor verbunden ist, und welcher an dem Rotor angeordnet ist, wenn die Inkrementalmaßverkörperung drehfest mit dem Stator verbunden ist,

einen Zeitmesser (40), der eingerichtet ist, in Folge eines jeden Vorbeilaufens einer Inkrementmarke (12) an dem Inkrementmaßsensor zurückgesetzt und neu gestartet zu werden, und

eine Auswerteeinheit (30), die eingerichtet ist, in Abhängigkeit eines Werts des Zeitmessers (40) den Rotorparameter für eine Zwischendrehposition des Rotors zu bestimmen, welche zwischen einer ersten Drehposition des Rotors zu einem ersten Zeitpunkt eines Vorbeilaufens einer ersten Inkrementmarke (12.1) und einer zweiten Drehposition des Rotors zu einem zweiten Zeitpunkt eines Vorbeilaufens einer der ersten Inkrementmarke (12.1) benachbarten zweiten Inkrementmarke (12.2) liegt,

**gekennzeichnet durch**

eine Absolutmaßverkörperung (21), die eine Geberkontur (22) aufweist, und

einen Abstandssensor, der der Absolutmaßverkörperung (21) gegenüberliegend angeordnet ist und eingerichtet ist, einen Abstand zu der Geberkontur (22) zu messen, wobei

die Geberkontur (22) mit einer Anzahl von Polpaaren des Elektromotors korrespondiert.

2. Vorrichtung (1) gemäß Anspruch 1, wobei die Auswerteeinheit (30) eingerichtet ist, einen absoluten Drehwinkel als Rotorparameter mittels mindestens einer Induktivitätsmessung eines E-Motors, welcher mit dem Rotor gekoppelt ist oder zu welchem der Rotor gehört, zu bestimmen.

3. Vorrichtung (1) gemäß Anspruch 1 oder 2, wobei der Inkrementmaßsensor (15) und der Absolutmaßsensor (25) gegeneinander um einen Winkel im Bereich von 45° bis < 180° versetzt sind.

4. Vorrichtung (1) gemäß einem der Ansprüche 1 bis 3, wobei der Rotorparameter oder einer der Rotorparameter ein Drehwinkel ist und die Auswerteeinheit (30) eingerichtet ist, nach einem Bestimmen eines absoluten Drehwinkels auf eine Bestimmen eines absoluten Drehwinkels auf der Basis der Inkrementalmaßverkörperung (11) umzuschalten.

5. Vorrichtung (1) gemäß einem der Ansprüche 1 bis 4, die eine Einrichtung zum Ansteuern des E-Motors in Abhängigkeit des Rotorparameters zum Erzeugen eines schwingungsdämpfenden Moments auf den Rotor aufweist.

## Claims

1. Device (1) for measuring a rotor parameter or a plurality of rotor parameters of an electric motor, wherein the device comprises:

incremental value indicating means (11) non-rotatably connected to a rotor or stator and comprising increment marks (12),

an incremental value sensor (15) disposed opposite to the incremental value indicating means (11) and disposed on the stator in case the incremental value indicating means is non-rotatably connected to the rotor and disposed on the rotor in case the incremental value indicating means is non-rotatably connected to the stator,

a timer (40) adapted to be reset and restarted subsequent to each passage of an increment mark (12) past the incremental value sensor, and

an evaluating unit (30) adapted to determine, depending on a value of the timer (40), the rotor parameter for an intermediate rotational position of the rotor which is between a first rotational position of the rotor at a first instant of a passage of a first increment mark (12.1) and a second rotational position of the rotor at a second instant of a passage of a second increment mark (12.2) adjacent to the first increment mark (12.1),

**characterized by**

absolute value indicating means (21) comprising an encoder contour (22) and

a distance sensor disposed opposite to the absolute value indicating means (21) and adapted to measure a distance to the encoder contour (22), wherein

the encoder contour (22) corresponds to a number of pole pairs of an electric motor.

2. Device (1) according to Claim 1, wherein the evaluating unit (30) is adapted to determine an absolute rotational angle as a rotor parameter by at least one inductance measurement of an electric motor that is coupled to the rotor or to which the rotor belongs.

3. Device (1) according to Claim 1 or 2, wherein the incremental value sensor (15) and the absolute value sensor (25) are offset relative to each other by an angle in the range from 45º to < 180º.

4. Device (1) according to one of Claims 1 to 3, wherein the rotor parameter or one of the rotor parameters is a rotational angle and the evaluating unit (30) is adapted to switch over to a determination of an absolute rotational angle on the basis of the incremental value indicating means (11) after a determination of an absolute rotational angle.

5. Device (1) according to any of Claims 1 to 4, comprising means for controlling the electric motor depending on the rotor parameter for generating a vibration-damping torque upon the rotor.

**Revendications**

1. Dispositif (1) destiné à mesurer un paramètre de rotor ou plusieurs paramètres de rotor d'un moteur électrique, dans lequel le dispositif comporte :

un moyen d'indication de valeur incrémentielle (11) relié solidaire en rotation à un rotor ou à un stator et comportant des repères incrémentiels (12),
un capteur de valeur incrémentielle (15) disposé en position opposée au moyen d'indication de valeur incrémentielle (11), qui est disposé sur le stator dans le cas où le moyen d'indication de valeur incrémentielle est relié solidaire en rotation au rotor, et qui est disposé sur le rotor dans le cas où le moyen d'indication de valeur incrémentielle est relié solidaire en rotation au stator,
un chronomètre (40) qui est conçu pour être réinitialisé et relancé après chaque passage devant un repère incrémentiel (12) sur le capteur de valeur incrémentiel, et
une unité d'analyse (30) qui est conçue pour déterminer en fonction d'une valeur du chronomètre (40) le paramètre de rotor pour une position de rotation intermédiaire du rotor qui se situe entre une première position de rotation du rotor à un premier instant de passage devant un premier repère incrémentiel (12.1) et une seconde position de rotation du rotor à un second instant de passage devant un second repère incrémentiel (12.2) voisin du premier repère incrémentiel (12.1),
**caractérisé par**
un moyen d'indication de valeur absolue (21) qui présente un contour de capteur (22), et
un capteur de distance qui est disposé en position opposée au moyen d'indication de valeur absolue (21) et est conçu pour mesurer une distance par rapport au contour de capteur (22), dans lequel
le contour de capteur (22) correspond à un nombre de paires de pôles du moteur électrique.

2. Dispositif (1) selon la revendication 1, dans lequel l'unité d'analyse (30) est conçue pour déterminer un angle de rotation absolu en tant que paramètre de rotor au moyen d'au moins une mesure d'induction d'un moteur électrique, laquelle mesure est couplée au rotor ou mesure à laquelle appartient le rotor.

3. Dispositif (1) selon la revendication 1 ou 2, dans lequel le capteur de valeur incrémentielle (15) et le capteur de valeur absolue (25) sont décalés l'un par rapport à l'autre d'un angle se situant dans la plage de 45° à < 180°.

4. Dispositif (1) selon l'une quelconque des revendications 1 à 3, dans lequel le paramètre de rotor ou l'un des paramètres de rotor est un angle de rotation et l'unité d'analyse (30) est conçue pour procéder à la détermination d'un angle de rotation absolu sur la base du moyen d'indication de valeur incrémentielle (11) après la détermination d'un angle de rotation absolu.

5. Dispositif (1) selon l'une quelconque des revendications 1 à 4, comprenant un dispositif destiné à commander le moteur électrique en fonction du paramètre de rotor afin de générer un couple d'amortissement des vibrations sur le rotor.

Fig. 1a

Fig. 1b

Fig. 1c

Fig. 2

Fig. 3a

Fig. 3b

Fig. 3c

Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0310823 A2
- US 5297048 A
- DE 102007033731 A1
- DE 102008014075 A1
- DE 102012209275 A1